# EUROPÄISCHE PATENTSCHRIFT

(11) **EP 1 857 847 B1**
(45) Veröffentlichungstag und Bekanntmachung des Hinweises auf die Patenterteilung: **18.05.2011**
(21) Anmeldenummer: 07104775.7
(22) Anmeldetag: 23.03.2007
(51) Int. Cl.: G02B 6/36

(54) **Vorrichtung und Verfahren zur Justage eines optischen Drehübertragers**
Device and method for adjusting an optical rotary joint
Dispositif et procédé d'alignement d'un transmetteur optique rotatif

(30) Priorität: 16.05.2006 DE 102006023086
(43) Veröffentlichungstag der Anmeldung: 21.11.2007
(73) Patentinhaber: Schleifring und Apparatebau GmbH, 82256 Fürstenfeldbruck (DE)
(72) Erfinder: Popp, Gregor, 80636, München (DE); Rank, Matthias, 93497, Willmering (DE); Dr. Stark, Markus, 96135, Waizendorf (DE)
(74) Vertreter: Lohr, Georg

(56) Entgegenhaltungen:
- EP-A1- 0 107 035
- JP-A- 57 139 717
- US-A- 4 848 867
- US-A- 5 157 745
- US-B1- 6 263 133

## Beschreibung

### Technisches Gebiet

Die Erfindung betrifft ein Verfahren zur Justage eines optischen Drehübertragers mit zwei zueinander um eine Drehachse verdrehbaren Einheiten, die je einen koaxialen Kollimator zur Lichtein- und Lichtauskoppelung haben, sowie einen mittels des Verfahrens justierbaren optischen Drehübertrager und weiterhin eine Vorrichtung zur Durchführung des Verfahrens.

### Stand der Technik

In der US 5,039,193 ist ein Einkanal-Singlemode Drehübertrager offenbart. Als Kollimatoren werden GRIN-Linsen eingesetzt.

Die US 4,81 5,812 offenbart einen weiteren Einkanal-Drehübertrager, bei dem die Kollimatoren in Form von GRIN-Linsen in Ferrulen aufgenommen sind. Diese Ferrulen sind in einer Ebene senkrecht zur Drehachse in ihrer Position durch Stellschrauben justierbar und können nach der Justierung mittels Epoxy fixiert werden.

Ein weiterer Drehübertrager mit Justiervorrichtung ist in der US 6,263,133 offenbart.

Bei Drehübertragern der einleitend genannten Gattung müssen die optischen Achsen der Kollimatoren koaxial zur Drehachse der Einheiten sein. Jede Abweichung der Achsen voneinander führt zu einer Dämpfung des Signals, d.h. zu einer Verschlechterung der Übertragungsqualität. Die Justierung eines solchen Drehübertragers ist oftmals aus konstruktiven Gründen nicht möglich oder nur mit einem sehr hohen Aufwand verbunden. Daher müssen vorgefertigte Kollimatoren mit engen Toleranzen eingesetzt werden. Insbesondere bei GRIN- Linsen besteht das Problem einer Verkippung der optischen Achse zur geometrischen Achse. Es können hier nur teure, vorselektierte Bauteile eingesetzt werden.

### Darstellung der Erfindung

Der Erfindung liegt die Aufgabe zugrunde, ein Justierverfahren der einleitend angegebenen Gattung sowie einen mittels eines solchen Verfahrens justierbaren Drehübertrager bereitzustellen. Weiterhin soll eine Vorrichtung zur Durchführung des Verfahrens angegeben werden.

Diese Aufgabe wird durch ein Verfahren nach den Ansprüchen 2 und 3, und durch einen Drehübertrager nach dem Anspruch 1 gelöst. Weiterbildungen der Erfindung sind Gegenstand der abhängigen Ansprüche.

Das Verfahren hat die Schritte:
a. Einsetzen eines ersten Kollimators 20 in eine erste von zwei Einheiten 11, 12,
b. Einspeisen von Licht in den ersten Kollimator 20,
c. Messen des Abstandes der Lichtbündelachse 5 von der Drehachse 4 an zwei Positionen, die zwei verschiedenen Lichtpfadlängen entsprechen.
d. Ermitteln der Verkippung α der Lichtbündelachse gegen die Drehachse 4 sowie des Abstandes Δx der optischen Achse von der Drehachse aus den in Schritt c. gemessenen Daten.
e. Minimieren des Abstandes und der Verkippung zwischen der Lichtbündelachse und der Drehachse durch Verschieben und/oder Verkippen des ersten Kollimators.
f. Positionieren des anderen Kollimators.

Gemäß diesem Verfahren werden zunächst die beiden Einheiten jeweils einzeln vormontiert, d.h. die Einheiten sind an sich jeweils soweit montiert, daß ein Kollimator 20 in die erste Einheit 11 und ein weiterer Kollimator 20 in die zweite Einheit 12 eingesetzt, jedoch noch nicht mit der Einheit fixiert ist. Für die Justage nicht benötigte etwaige Anbauteile können auch später montiert werden.

Eine so vorbereitete Einheit wird dann justiert. Dazu wird zunächst auf der der komplementären Einheit abgewandten Seite Licht in den Kollimator der vorbereiteten Einheit eingespeist. Dies geschieht beispielsweise über einen mit dem Kollimator fest verbundenen Lichtwellenleiter, z.B. eine Single-Mode-Faser, oder auch eine Multi-Mode-Faser.

Dann wird an zwei voneinander beabstandeten Positionen des Lichtpfades der Abstand der Lichtbündelachse von der Drehachse gemessen. Die Lichtbündelachse ist die Symmetrieachse des aus dem Kollimator austretenden Lichtbündels.

Vorzugsweise wird das Lichtbündel für die beiden Abstandsmessungen mittels eines Strahlteilers geteilt und mittel zweier Detektoren gleichzeitig detektiert. Ebenso kann der dem Kollimator nähere der beiden Detektoren in den Lichtpfad einschwenkbar sein, so daß die Messungen nacheinander durchführbar sind. Die Detektoren können beispielsweise CCD- oder CMOS- Kameras, 4-Quadranten Dioden oder "Beam-Scopes" sein. Alternativ kann auch ein einziger Detektor eingesetzt werden, welcher in seiner Position, das heißt dem Abstand zum Kollimator verstellbar ist.

Aus den gemessenen Abständen wird dann die Verkippung, das ist der Winkel zwischen der Lichtbündelachse und der Drehachse (inklusive der Kipp-Richtung) wenn die Achsen durch Parallelverschiebung so verschoben werden daß sie einen Schnittpunkt haben, ermittelt. Zudem wird ein Verschiebungsvektor, der die Lichtbündelachse auf die Drehachse bei angenommener korrigierter Verkippung aufeinander abbildet, bestimmt. Dieser Vektor wird vorzugsweise so gewählt, daß er identisch mit dem Abstandsvektor von der Lichtbündelachse zur Drehachse ist.

Im nächsten Schritt wird der Kollimator entgegen der in Schritt d. ermittelten Verkippung verkippt und gemäß dem Verschiebungsvektor verschoben. Im optimalen Fall liegt dann die Lichtbündelachse auf der Drehachse.

Anschließend kann die Messung der Abstände der Lichtbündelachse zu der Drehachse wiederholt werden, um die Positionierung des Kollimators zu kontrollieren. Gegebenenfalls kann der Kollimator nochmals verkippt und/oder verschoben werden. Dieser Vorgang d.h. die Schritte c., d. und e. wird bzw. werden so lange wiederholt, bis die Verkippung und der Abstand der optischen Achse des Kollimators und der Drehachse minimal sind. Minimal, bedeutet, daß die aus der Abweichung der Lichtbündelachse von der Drehachse resultierende Dämpfung optimiert ist beziehungsweise innerhalb eines vorgegebenen Toleranzbereichs liegt.

Ist die optimale Lage und Position des Kollimators in der vorbereiteten Einheit gefunden, wird der Kollimator in der Einheit fixiert, beispielsweise durch Verkleben oder Laserschweißen.

Eine Verklebung erfolgt vorzugsweise so, daß die gegeneinander zu fixierenden Teile in unmittelbarem flächigen Kontakt sind oder in anderen Worten die Verklebung erfolgt vorzugsweise spaltfrei. Dadurch verändert sich die Lage und Position der Kollimatoren zur Drehachse nicht aufgrund temperaturschwankungsbedingter Volumenänderungen der Klebers.

Vorzugsweise wird das Verfahren in einer Justageapparatur vorgenommen, die eine entsprechend vormontierte Einheit an den Flächen festlegt, durch die bei montiertem Drehübertrager die Position der komplementären Einheit zur in der Justageapparatur befindlichen Einheit bestimmt wird.

Das Verkippen und Verschieben der Kollimatoren kann beispielsweise mittels Stellschrauben erfolgen. Vorzugsweise greifen dazu in zwei von einander möglichst weit beabstandeten und zur optischen Achse orthogonalen Ebenen jeweils drei Stellschrauben am Umfangsrand des zu kippenden bzw. zu verschiebenden Kollimators an. Die Schrauben sind vorzugsweise jeweils mit einem Schrittmotor gekoppelt, so daß eine Steuerung aus den in Schritt c. gemessenen Abständen direkt die notwendigen Umdrehungszahlen berechnen und die Schrittmotoren entsprechend ansteuern kann. Ebenso können die Kollimatoren mittels Aktoren, z.B. Piezoaktoren in die gewünschte Position und Lage gebracht werden. Die Ebenen in denen die Stellvorrichtungen angreifen werden auch als Justageebenen bezeichnet.

Der zweite Kollimator kann gemäß den Schritten a. bis e. positioniert werden und dann fixiert werden. Die Vormontage dieses Kollimators kann jederzeit, jedoch vor Beginn des Schritts a. erfolgen. Selbstverständlich kann ein erfindungsgemäßes Verfahren auch beginnend mit dem zweiten Kollimator durchgeführt werden.

Ebenso kann der zweite Kollimator nach der Justage des ersten Kollimators auch durch Messen der Dämpfung des montierten Drehübertragers bestimmt werden. Dazu wird in einen Kollimator Licht eingespeist und an dem anderen Kollimator detektiert, so daß die Dämpfung bekannt ist. Nun werden die beiden Einheiten um einen bekannten Winkel, beispielsweise 90° gegeneinander verdreht und anschließend wird nochmals die Dämpfung gemessen. Anschließend wird der zweite Kollimator in Abhängigkeit der gemessenen Dämpfungen verkippt und verschoben um die Dämpfung zu minimieren. Dieser Vorgang wird iteriert bis die Dämpfung minimal und möglichst nicht von dem Verdrehwinkel der beiden Einheiten abhängt. Schlußendlich wird auch der zweite Kollimator fixiert. Dies kann wie beim ersten Kollimator erfolgen.

In einer weiteren Variante des erfindungsgemäßen Verfahrens kann Schritt c auch aus den folgenden Schritten bestehen:
c1. Messen des Abstandes der Lichtbündelachse von der Drehachse mittels eines Detektors,
c2. Abschatten eines Teils des Detektors mit einem an bekannter Position im Strahlengang zwischen Kollimator und Detektor befindlichem Schattenobjekt, und
c3. Messen der Schattenposition auf dem Detektor.
Die anderen Schritte laufen wie zuvor beschrieben ab.

Der Drehübertrager nach der Erfindung hat zwei zueinander um eine Drehachse verdrehbaren Einheiten die jeweils einen Kollimator zur Ein- und/oder Auskoppelung von Licht haben. Die Halterung der Kollimatoren in ihren jeweiligen Einheiten kann zueinander funktions-äquivalent sein. Daher wird nachfolgend nur die Halterung eines Kollimators in einer Einheit beschrieben.

Der Kollimator wird von zwei Teilen 16, 18 in der Einheit gehaltert. Dazu greifen die beiden Teile in jeweils unterschiedlichen zur optischen Achse des ersten Kollimators orthogonalen Ebenen an. Vorzugsweise sind diese Ebenen möglichst weit voneinander beabstandet. Zur zuvor beschriebenen Justage sind die Teile relativ zur Einheit verschiebbar. Vorzugsweise sind die Teile orthogonal zur Drehachse verschiebbar. Mindestens eines der beiden Teile ist in unmittelbarem flächigem Kontakt mit der ersten Einheit, und kann beispielsweise mit einer als Klebstoff fungierenden erstarrenden Masse, wie zum Beispiel Epoxy, in seiner Position zur Einheit fixiert werden, d.h. spaltfrei verklebt werden. Sofern das zweite Teil nicht auch in unmittelbarem flächigem Kontakt mit der Einheit ist, kann es in unmittelbarem flächigem Kontakt mit dem ersten Teil sein. In jedem Fall ist das zweite Teil 18 erschütterungsfest fixierbar. Dadurch das die Teile mit der Einheit, bzw. untereinander in flächigem unmittelbaren Kontakt sind ist der Drehübertrager vergleichsweise unempfindlich gegenüber Temperaturschwankungen, u.a. weil temperaturschwankungsbedingte Volumenänderungen einer zur Fixierung verwendeten erstarrenden Masse, d.h. eines Klebers nicht die Lage der Teile zueinander oder zu der Einheit und somit auch nicht die Lage des von den Teilen gehalterten Kollimators zu der Einheit beeinflussen.

Zu Justage wird die Einheit zumindest soweit vormontiert, daß sie über beide Teile 16, 18 und den Kollimator 20 verfügt. Zur Minimierung des Abstandes und der Verkippung zwischen der Lichtbündelachse und der Drehachse gemäß dem zuvor beschriebenen Verfahren wird vorzugsweise eine Justagevorrichtung verwendet. Die Justagevorrichtung hat Stellvorichtungen, die die an den beiden Teilen angreifen. Durch Verschieben der Teile mittels der Stellvorichtungen wird der Kollimator optimal positioniert. Das Verschieben der beiden Teile erfolgt vorzugsweise in zu der Drehachse orthogonalen Ebenen, d.h. jeweils entlang zweier zur Drehachse orthogonaler Achsen. Nach der Positionierung werden die Teile mit etwas Klebstoff, z.B. einem Epoxydharz in ihrer jeweiligen Position gesichert, wodurch auch der Kollimator fixiert wird.

Vorteilhafterweise haben die orthogonal zur optischen Achse liegenden Ebenen einen Abstand der größer 1/2, vorzugsweise größer als 9/10 der Länge des ersten Kollimators.

Eine Vorrichtung zur Durchführung des Verfahrens umfasst eine Aufnahme und Positioniereinheit 31, in welche eine erste Einheit 11 und/oder eine zweite Einheit 12 wahlweise eingesetzt werden können. Eine in diese Aufnahme eingesetzte Einheit muss wenigstens einen Kollimator 20, 1 umfassen. Weiterhin ist wenigstens ein erster Detektor 2 in einem vorgegebenen Abstand zu dem Kollimator 20, 1 vorgesehen. Dieser Detektor 2 ist derart angeordnet, dass er aus dem Kollimator austretendes Licht in seiner Lage relativ zur späteren Drehachse 14 des fertig zusammengebauten Drehübertragers ermitteln kann. Die Drehachse 14 des fertigen Drehübertragers entspricht der Mittelachse der ersten Einheit 11 beziehungsweise der zweiten Einheit 12. Weiterhin ist ein zweiter Detektor 3 vorgesehen, welcher in einem größeren, vorgegebenen Abstand zu dem Kollimator 20, 1 angeordnet ist. Auch dieser Detektor 3 ist derart angeordnet, dass er aus dem Kollimator austretendes Licht in seiner Lage relativ zur späteren Drehachse 14 des fertig zusammengebauten Drehübertragers ermitteln kann. Zur Auswertung der Signale aus den Detektoren 2, 3 ist eine Auswerteeinheit 34 vorgesehen, welche die Signale 32, 33 der Detektoren 2, 3 auswertet und ein oder mehrere Steuersignale 35 für die Aufnahme und Positioniereinheit 31 zur Justage der zu justierenden Einheit abgibt. Detektor 2 ist vorzugsweise derart ausgebildet, dass zumindest ein Teil des Lichtstrahls noch durch diesen hindurchtreten kann, so dass für den Detektor 3 noch ein ausreichendes Messsignal zur Verfügung steht. Dies kann beispielsweise durch Auskopplung mittels eines teildurchlässigen Spiegels oder eines Prismas realisiert sein. Anstelle der beiden Detektoren 2 und 3 kann auch ein einziger Detektor eingesetzt werden, der in zeitlicher Abfolge die beiden Positionen der Detektoren 2 und 3 einnimmt.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Fig. 1:: Veranschaulicht das Prinzip des Verfahrens nach der Erfindung
- Fig. 2:: Zeigt ein Ausführungsbeispiel eines Drehübertragers nach der Erfindung im Schnitt.
- Fig. 3:: Zeigt ein Beispiel einer Vorrichtung zur Durchführung des Verfahrens.
- Fig. 4:: Zeigt ein Beispiel einer Vorrichtung zur Durchführung des Verfahrens mit einem Strahlteiler.

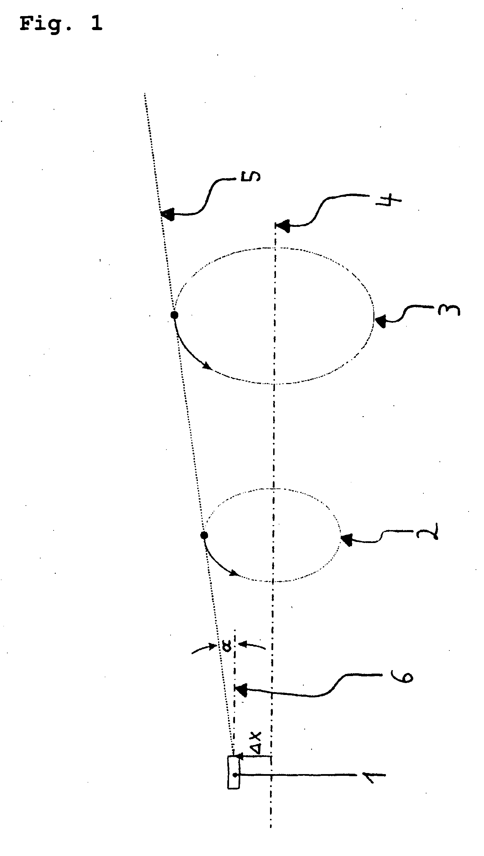

Figur 1 zeigt einen Kollimator 1, mit einer gegen die Symmetrieachse 6 seines Gehäuses verkippten Lichtbündelachse 5. Hier ist die Symmetrieachse 6 parallel zur Drehachse 4 der nicht dargestellten gegeneinander verdrehbaren Einheiten. Um eine optimale, d.h. minimale Dämpfung des montierten Drehübertragers zu erzielen, wird mittels zweier voneinander beabstandeter Detektoren 2 und 3 an zwei voneinander beabstandeten Stellen der Abstand zwischen Lichtbündelachse 5 und der Drehachse 4 gemessen. Aus den gemessenen Abständen kann die Verkippung α zwischen der Drehachse und der Lichtbündelachse bestimmt werden. Ebenso kann auch der Abstandsvektor Δx zwischen den zuletzt genannten Achsen bestimmt werden. Wird der Kollimator nun um -Δx verschoben und um -α gekippt, so ist die optische Achse identisch zur Drehachse.

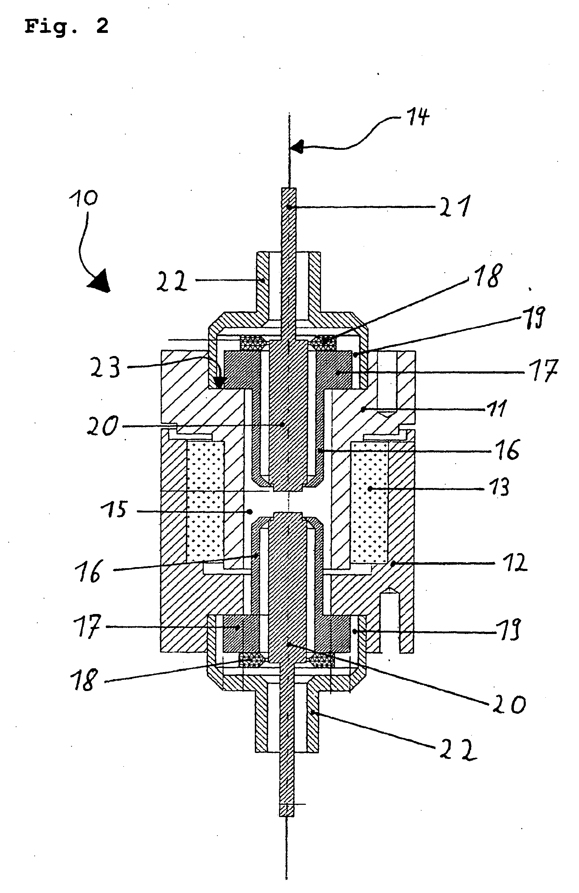

Der in Fig. 2 abgebildete optische Drehübertrager 10 hat eine erste Einheit 11 und eine zweite Einheit 12, die mittels eines Lagers 13 um eine Drehachse 14 gegeneinander frei rotierbar verbunden sind. Die erste Einheit hat eine zur Drehachse rotationssymmetrische, die Stirnflächen der ersten Einheit verbindende Ausnehmung 15. Die Ausnehmung 15 ist zu der der zweiten Einheit 12 abgewandten Stirnfläche gestuft erweitert. Die Stufe 23 dient als Anschlag für einen Flansch 17 eines im Wesentlichen hohlzylindrischen ersten Teils 16, das in der gestuften Ausnehmung 15 sitzt. Das erste Teil 16 ist in der Ausnehmung entlang der Stufe 23 verschiebbar. Der der zweiten Einheit 12 zugewandte Endbereich des ersten Teils 16 ist hohlkegelsegmentartig verjüngt. In dem ersten Teil 16 sitzt ein Kollimator 20. Der Kollimator 20, entsprechend dem Kollimator 1 aus Figur 1 hat eine gestuft verjüngte Außenhülle. Der Umfangsrand des Kollimators 20 an der Stufe sitzt in der hohlkegelsegmentartigen Verjüngung.

Das andere Ende des Kollimators durchsetzt ein ringförmiges zweites Teil 18, das flächig auf der der zweiten Einheit 12 abgewandten Stirnfläche des ersten Teils 16 aufliegt. Nach Innen verjüngt sich die Breite des ringförmigen zweiten Teils 18. Die dadurch gebildete Schneide haltert den Kollimator 20 an seinem der zweiten Einheit 12 abgewandten Ende. Das zweite Teil 18 ist entlang der Stirnfläche verschiebbar. Wird das zweite Teil 18 auf der Stirnfläche verschoben, so wird dadurch der Kollimator gegen die Drehachse 14 verkippt. Wird das erste Teil 16 entlang der Stufe 23 verschoben und dabei das zweite Teil 18 mitgeführt, so wird dadurch der Kollimator parallel zur Drehachse 14 verschoben. Somit kann durch Verschieben des ersten Teils 16 und des zweiten Teils 18 die optische Achse des Kollimators auf die Drehachse 14 abgebildet werden. Ist die optimale Position des Kollimators gefunden, so wird das erste Teil 16 mittels eines Klebers fixiert. Die Fixierung sollte hier spaltfrei erfolgen. Dann hängt die Position des ersten Teils 16 zu der ersten Einheit 11 nicht von temperaturbedingten Volumenschwankungen des Klebers hängt. "spaltfrei" bedeutet in Bezug auf die Erfindung, dass die Teile mit einem minimalen Spalt zueinander verklebt werden. Die typische Dicke eines solchen Spalts liegt unter 0,1 mm. Es besteht also keine dickere Schicht aus einem Klebstoff oder aus einem Füllmaterial. Im Gegensatz hierzu ist in der US 4,815,812 ein relativ dicker Klebespalt offenbart. So wird sogar der ganze hinter dem Kollimator verbliebene Hohlraum mit Klebstoff beziehungsweise Füllmaterial aufgefüllt. Der Nachteil an großen Klebespalten ist, dass das zum Kleben verwendete Material häufig einen anderen Temperaturkoeffizienten als das umgebende Gehäusematerial aufweist. Dadurch verursachen insbesondere dicke Kleberschichten unerwünschte Ausdehnungen und somit unerwünschte Verschiebungen oder auch Verkippungen der Anordnung. Eine spaltfreie Fixierung erfolgt im Falle des Flansches 17 durch Auftrag einer dünnen Kleberschicht auf die Stufe 23 einer Einheit 11, 12. Durch mechanischen Andruck der Teile gegeneinander kann der rechtliche Kleber aus dem Spalt gepresst werden. Es darf kein Kleber in den Spalt 19 zwischen dem Flansch 17 und der Staub- und Knickschutzkappe 22 gelangen, da dieser dann durch thermische Ausdehnungen zu einer seitlichen Verschiebung des Flansches 17 führen würde. Eine dünne Schicht Kleber zwischen dem Flansch 17 und der Stufe 23 einer Einheit 11, 12 würde hier allenfalls zu einer Verschiebung in Richtung der optischen Achse führen. Diese hat aber keinen wesentlichen Einfluss auf die Dämpfung des Drehübertragers, da die Kollimatoren parallele Strahlenbündel erzeugen. Aus diesem Grunde wird auch die Längsachse des optischen Drehübertragers nicht justiert. Ebenso wird das ringförmige zweite Teil 18 an dem ersten Teil 16 spaltfrei fixiert. Hierzu erfolgt wieder ein dünner flächiger Kleberauftrag an den Anlageflächen des ringförmigen zweiten Teils 18 an dem ersten Teil 16.

Wesentlich bei dieser Ausgestaltung eines Drehübertragers ist, dass durch gezieltes Verschieben entsprechender Teile eine Verschiebung beziehungsweise Positionierung senkrecht zur Drehachse und durch gezieltes Verschieben weiterer Teile eine gezielte Verkippung möglich ist. So musste bisher oftmals ein zylinderförmiger Kollimator innerhalb einer zylinderförmigen Hülse mittels einer separaten Positioniereinrichtung innerhalb dieser vier Achsen gehalten und dann verklebt werden. Nun kann durch Verschieben des Flansches 17 zusammen mit dem Kollimator 20 und dem ringförmigen zweiten Teil 18 eine Justage in zwei Achsen senkrecht zur Rotationsachse und durch Verschieben des ringförmigen zweiten Teils 181 Justage der Verkippung in zwei Achsen erfolgen.

Nach der Fixierung der beiden Teile 16, 18 und somit des Kollimators 20 wird eine Staub und Knickschutzkappe 22 in den Spalt 19 eingesetzt. Die Kappe 22 hat einen mittigen Durchlass für einen Single-Mode Lichtleiter 21, dessen eines Ende mit dem Kollimator verbunden ist und dessen anderes Ende zum Einspeisen und/oder dem Empfang von Daten dient.

Die zweite Einheit ist zur ersten Einheit funktions-äquivalent aufgebaut. Gleiche Teile sind mit gleichen Bezugszeichen gekennzeichnet.

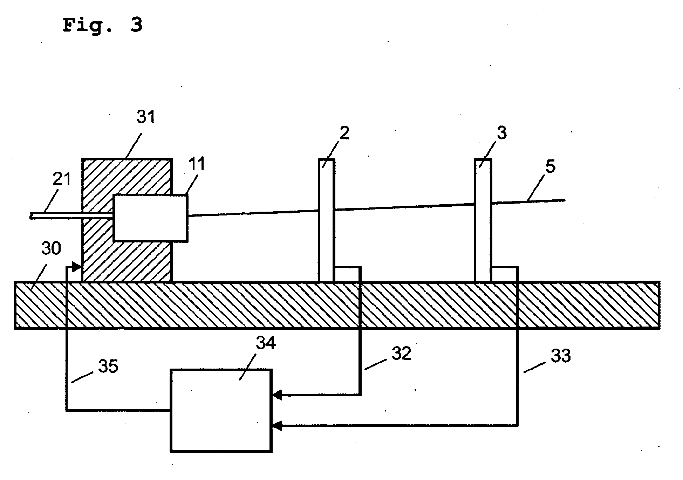

Figur 3 zeigt beispielhaft eine Vorrichtung zur Durchführung des Verfahrens. Eine Trägerplatte 30, beispielsweise eine optische Bank dient zur Aufnahme der optischen Komponenten. Die zu justieren den Einheiten, hier beispielsweise eine erste Einheit 11 werden in einer Aufnahme mit Positioniereinheit 31 aufgenommen. Die Positioniereinheit die Aufgabe, die justierbaren Komponenten wie das erste Teil 16 und das zweite Teil 18 entsprechend dem ermittelten Messergebnissen zu justieren. In den Lichtwellenleiter 21 wird durch eine hier nicht dargestellte Lichtquelle Licht eingespeist. Dieser tritt durch den Kollimator in der zu justierenden Einheit 11 entlang der Lichtbündelachse 5 aus. Die Detektoren 2 und 3 Messen die Position des Lichtkopplers beziehungsweise die Abweichung der Lichtbündelachse von der Drehachse der zu justierenden Einheit und übermitteln entsprechende Signale 32 und 33 zu einer Auswerte- und Steuereinheit 34. Diese ermittelt aus den gemessenen Werten entsprechende Stellwerk beziehungsweise Korrekturwerte zur Ansteuerung der Aufnahme und Positioniereinheit 31 mittels eines oder mehrerer Steuersignale 35.

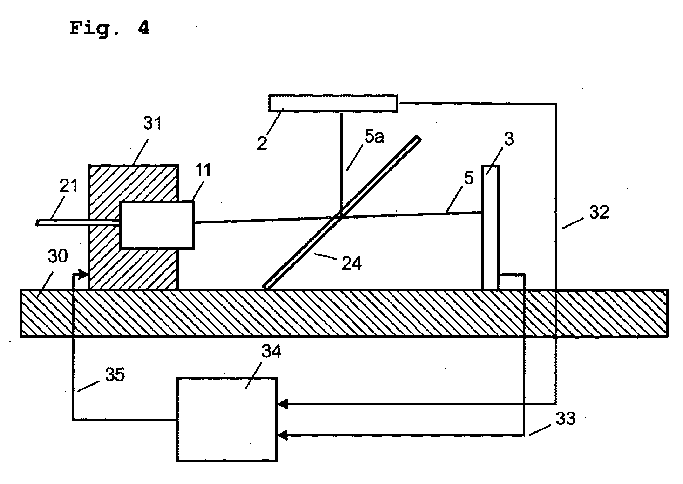

In Figur 4 ist schematisch eine Anordnung mit einem Strahlteiler 24 gezeigt. Dieser Strahlteiler koppelt einen Teil des Lichtstrahls entsprechend einer neuen Teil-Lichtbündelachse 5a zum Detektor 2 aus und lässt einen weiteren Teil zum Detektor 3 passieren. In diesem Fall können beide Detektoren, insbesondere der Detektor 2 absorbierend ausgeführt werden.

### Bezugszeichenliste

- 1: Kollimator
- 2: erster Detektor
- 3: zweiter Detektor
- 4: Drehachse
- 5: Lichtbündelachse
- 6: Symmetrieachse des Kollimatorgehäuses
- 10: Drehübertrager
- 11: Erste Einheit
- 12: Zweite Einheit
- 13: Lager
- 14: Drehachse
- 15: Zur Drehachse rotationssymmetrische gestufte Ausnehmung
- 16: erstes Teil
- 17: Flansch des ersten Teils
- 18: Ringförmiges zweites Teil
- 19: Spalt
- 20: Kollimator
- 21: Lichtwellenleiter
- 22: Staub- und Knickschutzkappe
- 23: Stufe der Ausnehmung
- 24: Strahlteiler
- 30: Trägerplatte
- 31: Aufnahme und Positioniereinheit
- 32: Signal vom ersten Detektor
- 33: Signal von zweiten Detektor
- 34: Auswerte- und Steuereinheit
- 35: Steuersignal
- Δx: Abstand der Lichtbündelachse zur Drehachse
- α: Verkippungswinkel

## Patentansprüche

1. Optischer Drehübertrager mit zwei zueinander um eine Drehachse verdrehbaren Einheiten (11, 12) die jeweils einen Kollimator zur Ein- und/oder Auskoppelung von Licht haben,
**dadurch gekennzeichnet, daß**
mindestens einer der beiden Kollimatoren (20) von einem ersten Teil (16) und einem zweiten Teil (18) in einer der beiden Einheiten (11, 12) gehaltert ist, wobei
- das erste Teil (16) in direktem flächigem Kontakt mit der jeweiligen Einheit (11, 12) in einer Ebene orthogonal zur Drehachse gegenüber der jeweiligen Einheit (11, 12) verschiebbar ist und an dem mindestens einen Kollimator (20) in einer zur optischen Achse des ersten Kollimators orthogonalen Ebene angreift, und erste Teil (16) mittels einer erstarrenden Masse nach der Justage in seiner Position zur jeweiligen Einheit (11, 12) spaltfrei fixiert ist,
- das zweite Teil (18) in einer Ebene orthogonal zur Drehachse gegenüber dem ersten Teil (16) verschiebbar ist und an dem mindestens einen Kollimator (20) in einer zur optischen Achse des ersten Kollimators orthogonalen Ebene angreift, wobei diese Ebene parallel zur Angriffsebene des ersten Teil liegt,
so dass durch eine Verschiebung des ersten Teils (16) der mindestens eine Kollimator (20) zusammen mit dem zweiten Teil (18) parallel zur optischen Achse verschoben wird,
durch eine Verschiebung des zweiten Teils (18) der mindestens eine Kollimator (20) gegenüber der optischen Achse verkippt wird, und
das erste Teil (16) mittels einer erstarrenden Masse nach der Justage in seiner Position zur ersten Einheit spaltfrei fixiert ist.

2. Verfahren zur Justage eines optischen Drehübertragers (10) nach Anspruch 1 mit zwei zueinander um eine Drehachse verdrehbaren Einheiten (11, 12), wobei jede Einheit einen koaxialen Kollimator (20) zur Lichtein- und Lichtauskoppelung hat, mit den Schritten:
a. Einsetzen des ersten Kollimators (20) in die erste Einheit (11),
b. Einspeisen von Licht in den Kollimator,
c. Messen des Abstandes der Lichtbündelachse (5) von der Drehachse (14) an zwei Positionen, die zwei verschiedenen Lichtpfadlängen entsprechen.
d. Ermitteln der Verkippung (α) der optischen Achse des ersten Kollimators gegen die Drehachse sowie des Abstandes (Δx) der Lichtbündelachse (5) von der Drehachse (14) aus den in Schritt c. gemessenen Daten.
e. Minimieren des Abstandes (Δx) und der Verkippung (α) zwischen der Lichtbündelachse und der Drehachse durch Verschieben und/oder Verkippen des ersten Kollimators entsprechend den aus Schritt d. ermittelten Werten der Verkippung und des Abstandes.
f. Positionieren des zweiten Kollimators in der zweiten Einheit (12).

3. Verfahren zur Justage eines optischen Drehübertragers (10) nach Anspruch 1 mit zwei zueinander um eine Drehachse verdrehbaren Einheiten (11, 12), wobei jede Einheit einen koaxialen Kollimator (20) zur Lichtein- und Lichtauskoppelung hat, mit den Schritten:
a. Einsetzen des ersten Kollimators (20) in die erste Einheit (11),
b. Einspeisen von Licht in den Kollimator,
c. Messen des Abstandes der Lichtbündelachse (5) von der Drehachse (14) mittels eines Detektors, Abschatten eines Teils des Detektors mit einem an bekannter Position im Strahlengang zwischen Kollimator und Detektor befindlichem Schattenobjekt und Messen der Schattenposition auf dem Detektor,
d. Ermitteln der Verkippung (α) der optischen Achse des ersten Kollimators gegen die Drehachse sowie des Abstandes (Δx) der optischen Achse von der Drehachse aus den in Schritt c. gemessenen Daten, und
e. Minimieren des Abstandes und der Verkippung zwischen der Lichtbündelachse und der Drehachse durch Verschieben und/oder Verkippen des ersten Kollimators entsprechend den aus Schritt d. ermittelten werten der Verkippung und des Abstandes.
f. Positionieren des zweiten Kollimators in der zweiten Einheit (12).

4. Verfahren nach Anspruch 2,
**dadurch gekennzeichnet, daß**
der zweite Kollimator durch Wiederholung der Schritte a. bis e. positioniert wird.

5. Verfahren nach Anspruch 3,
**dadurch gekennzeichnet, daß**
der zweite Kollimator durch Wiederholung der Schritte a. bis e. positioniert wird.

6. Verfahren nach einem der vorhergehenden Ansprüche,
**dadurch gekennzeichnet, daß**
der erste und/oder zweite Kollimator, nachdem er durch Verschieben und/oder Verkippen positioniert wurde mittels einer erstarrenden Masse spaltfrei fixiert wird.

7. Verfahren nach einem der vorhergehenden Ansprüche,
**dadurch gekennzeichnet, daß**
der erste und/oder zweite Kollimator, nachdem er durch Verschieben und/oder Verkippen positioniert wurde durch Laserschweißen spaltfrei fixiert wird.

8. Verfahren nach einem der Ansprüche 2 oder 3,
**dadurch gekennzeichnet, daß**
das aus dem ersten Kollimator austretende Lichtbündel in zwei Teilbündel geteilt wird und die Teilbündels auf jeweils einen Lichtsensor auftreffen, wobei die Lichtpfade der Teilbündel verschieden lang sind,

9. Verfahren nach einem der vorhergehenden Ansprüche,
**dadurch gekennzeichnet, daß**
der erste und/oder zweite Kollimator mittels zweier Gruppen von vorzugsweise jeweils drei äquidistanten Stellschrauben in der zugehörigen Einheit verschoben und/oder verkippt wird.

10. Verfahren nach Anspruch 9,
**dadurch gekennzeichnet, daß**
zum Verschieben und/oder Verkippen Schrittmotoren, die auf die Stellschrauben wirken verwendet werden.

11. Verfahren nach einem der Ansprüche 2 bis 8,
**dadurch gekennzeichnet, daß**
zum Verschieben und/oder Verkippen Piezoaktoren verwendet werden.

12. Drehübertrager nach Anspruch 1,
**dadurch gekennzeichnet, daß**
das erste Teil (16) und das zweite Teil (18) nach der Justage mittels einer erstarrenden Masse in direktem flächigem Kontakt miteinander verbunden sind.

13. Drehübertrager nach Anspruch 1 oder 12,
**dadurch gekennzeichnet, daß**
das erste Teil (16) und das zweite Teil (18) jeweils an mindestens drei Stellen am Umfang des ersten Kollimators angreifen.

14. Drehübertrager nach einem der Ansprüche 1 oder 12 bis 13,
**dadurch gekennzeichnet, daß**
die orthogonal zur optischen Achse liegenden Ebenen einen Abstand haben der größer 1/2, vorzugsweise größer als 9/10 der Länge des ersten Kollimators ist.

## Claims

1. Optical rotary transmitter, comprising two units (11, 12) which are rotatable with respect to one another about a rotational axis and which each comprise a collimator for feeding and/or decoupling light, **characterized in that** at least one of the two collimators (20) is held by a first part (16) and a second part (18) in one of the two units (11, 12), with
- the first part (16) in direct planar contact with the respective unit (11, 12) being displaceable in a plane orthogonally to the rotational axis in relation to the respective unit (11, 12) and acting on the at least one collimator (20) in a plane which is orthogonal to the optical axis of the first collimator, and the first part (16) being fixed in a gap-free manner by means of a solidifying compound after the adjustment in its position relative to the respective unit (11, 12);
- the second part (18) being displaceable in a plane orthogonally to the rotational axis relative to the first part (16), and acting on the at least one collimator (20) in a plane orthogonally to the optical axis of the first collimator, with said plane being parallel to the plane of attack of the first part, so that as a result of the displacement of the first part (16) the at least one collimator (20) is displaced together with the second part (18) parallel to the optical axis, the at least one collimator (20) is tilted with respect to the optical axis by a displacement of the second part (18), and the first part (16) is fixed in a gap-free manner by means of a solidifying compound after the adjustment in its position relative to the first unit.

2. A method for adjusting an optical rotary transmitter (10) according to claim 1, comprising two units (11, 12) which are rotatable about a rotational axis with respect to one another, with each unit comprising a coaxial collimator (20) for feeding and decoupling light, with the following steps:
a) insertion of the first collimator (20) into the first unit (11);
b) feeding light into the collimator;
c) measuring the distance of the light bundle axis (5) from the rotational axis (14) at two positions which correspond to two different light path lengths;
d) determination of the tilting (α) of the optical axis of the first collimator against the rotational axis and the distance (Δx) of the light bundle axis (5) from the rotational axis (14) from the data as measured in step c;
e) minimizing the distance (Δx) and the tilting (α) between the light bundle axis and the rotational axis by displacing and/or tilting the first collimator according to the values of the tilting and distance as determined from step d;
f) positioning of the second collimator in the second unit (12) .

3. A method for adjusting an optical rotary transmitter (10) according to claim 1, comprising two units (11, 12) which are rotatable about a rotational axis with respect to one another, with each unit comprising a coaxial collimator (20) for feeding and decoupling light, with the following steps:
a) insertion of the first collimator (20) into the first unit (11);
b) feeding light into the collimator;
c) measuring the distance of the light bundle axis (5) from the rotational axis (14) by means of a detector, shading off a portion of the detector with a shadow object disposed at a known location in the beam path between the collimator and detector, and measuring the shadow position on the detector;
d) determination of the tilting (α) of the optical axis of the first collimator against the rotational axis and the distance (Δx) of the light bundle axis (5) from the rotational axis (14) from the data as measured in step c;
e) minimizing the distance (Δx) and the tilting (α) between the light bundle axis and the rotational axis by displacing and/or tilting the first collimator according to the values of the tilting and distance as determined from step d;
f) positioning of the second collimator in the second unit (12) .

4. A method according to claim 2, **characterized in that** the second collimator is positioned by repeating the steps a) to e).

5. A method according to claim 3, **characterized in that** the second collimator is positioned by repeating the steps a) to e).

6. A method according to one of the preceding claims,
**characterized in that** the first and/or second collimator, after being positioned by displacement and/or tilting, is fixed in a gap-free manner by means of a solidifying compound.

7. A method according to one of the preceding claims,
**characterized in that** the first and/or second collimator, after being positioned by displacement and/or tilting, is fixed in a gap-free manner by laser welding.

8. A method according to one of the claims 2 or 3,
**characterized in that** the light bundle exiting from the first collimator is divided into two partial bundles and the partial bundles each impinge on a light sensor, with the light paths of the partial bundles having different lengths.

9. A method according to one of the preceding claims,
**characterized in that** the first and/or second collimator is displaced and/or tilted by means of two groups of preferably three respective equidistant adjusting screws in the respective unit.

10. A method according to claim 9, **characterized in that** stepper motors which act upon the adjusting screws are used for displacement and/or tilting.

11. A method according to one of the claims 2 to 8,
**characterized in that** piezo actuators are used for displacement and/or tilting.

12. A rotary transmitter according to claim 1, **characterized in that** the first part (16) and the second part (18) are connected after adjustment in direct planar contact with one another by means of a solidifying compound.

13. A rotary transmitter according to claim 1 or 12,
**characterized in that** the first part (16) and the second part (18) respectively act on at least three points on the circumference of the first collimator.

14. A rotary transmitter according to one of the claims 1 or 12 to 13, **characterized in that** the planes that are disposed orthogonally to the optical axis have a distance larger than 1/2, preferably larger than 9/10, of the length of the first collimator.

## Revendications

1. Transmetteur optique rotatif avec deux unités (11, 12) pouvant tourner l'une par rapport à l'autre autour d'un axe, qui possèdent chacune un collimateur pour l'entrée et/ou la sortie de lumière, **caractérisé en ce qu'**au moins un des deux collimateurs (20) est retenu par une première partie (16) et une deuxième partie (18) dans l'une des deux unités (11, 12), dans lequel
- la première partie (16) est capable de translation en contact direct à plat avec l'unité (11, 12) correspondante dans un plan perpendiculaire à l'axe de rotation par rapport à l'unité (11, 12) correspondante et se met en prise sur l'au moins un collimateur (20) dans un plan perpendiculaire à l'axe optique du premier collimateur, et la première partie (16) est fixée sans espace au moyen d'une masse durcissable après l'ajustement dans sa position par rapport à l'unité (11, 12) correspondante ;
- la deuxième partie (18) peut se déplacer dans un plan perpendiculaire à l'axe de rotation par rapport à la première partie (16) et se met en prise sur l'au moins un collimateur (20) dans un plan perpendiculaire au plan optique du premier collimateur, lequel plan est parallèle au plan de prise de la première partie,
de sorte qu'une translation de la première partie (16) fait se déplacer l'au moins un collimateur (20) avec la deuxième partie (18) parallèlement à l'axe optique,
une translation de la deuxième partie (18) fait basculer l'au moins un collimateur (20) par rapport à l'axe optique, et
la première partie (16) est fixée sans espace au moyen d'une masse durcissable après l'ajustement de sa position par rapport à la première unité.

2. Procédé pour l'ajustement d'un transmetteur optique rotatif (10) selon la revendication 1 avec deux unités (11, 12) pouvant tourner l'une par rapport à l'autre autour d'un axe, qui possèdent chacune un collimateur (20) pour l'entrée et/ou la sortie de lumière, comprenant les étapes de :
a. insertion du premier collimateur (20) dans la première unité (11),
b. apport de lumière dans le collimateur,
c. mesure de la distance entre l'axe du faisceau lumineux (5) et l'axe de rotation (14) dans deux positions correspondant à deux longueurs différentes du trajet de la lumière,
d. détermination du basculement (α) de l'axe optique du premier collimateur par rapport à l'axe de rotation ainsi que de la distance (Δx) entre l'axe du faisceau lumineux (5) et l'axe de rotation (14) à partir des données mesurées dans l'étape c,
e. minimisation de la distance (Δx) et du basculement (α) entre l'axe du faisceau lumineux et l'axe de rotation par la translation et/ou le basculement du premier collimateur selon les valeurs de basculement et de distance déterminées dans l'étape d,
f. positionnement du deuxième collimateur dans la deuxième unité (12).

3. Procédé pour l'ajustement d'un transmetteur optique rotatif (10) selon la revendication 1 avec deux unités (11, 12) pouvant tourner l'une par rapport à l'autre autour d'un axe, qui possèdent chacune un collimateur (20) pour l'entrée et/ou la sortie de lumière, comprenant les étapes de :
a. insertion du premier collimateur (20) dans la première unité (11),
b. apport de lumière dans le collimateur,
c. mesure de la distance entre l'axe du faisceau lumineux (5) et l'axe de rotation (14) au moyen d'un détecteur, occultation d'une partie du détecteur avec un obturateur situé dans une position connue dans le trajet du faisceau entre le collimateur et le détecteur et mesure de la position d'occultation sur le détecteur,
d. détermination du basculement (α) de l'axe optique du premier collimateur par rapport à l'axe de rotation ainsi que de la distance (Δx) entre l'axe optique et l'axe de rotation à partir des données mesurées dans l'étape c, et
e. minimisation de la distance et du basculement entre l'axe du faisceau lumineux et l'axe de rotation par la translation et/ou le basculement du premier collimateur selon les valeur de basculement et de distance déterminées dans l'étape d,
f. positionnement du deuxième collimateur dans la deuxième unité (12).

4. Procédé selon la revendication 2, **caractérisé en ce que** le deuxième collimateur est positionné par répétition des étapes a à e.

5. Procédé selon la revendication 3, **caractérisé en ce que** le deuxième collimateur est positionné par répétition des étapes a à e.

6. Procédé selon l'une des revendications précédentes, **caractérisé en ce que** le premier et/ou le deuxième collimateur, après avoir été positionné par translation et/ou basculement, est fixé sans espace au moyen d'une masse durcissable.

7. Procédé selon l'une des revendications précédentes, **caractérisé en ce que** le premier et/ou le deuxième collimateur, après avoir été positionné par translation et/ou basculement, est fixé sans espace par soudage au laser.

8. Procédé selon l'une des revendications 2 ou 3, **caractérisé en ce que** le faisceau lumineux sortant du premier collimateur est divisé en deux faisceaux partiels et les faisceaux partiels atteignent chacun un photocapteur, les trajets lumineux des faisceaux partiels étant de longueur différente.

9. Procédé selon l'une des revendications précédentes, **caractérisé en ce que** le premier et/ou le deuxième collimateur est déplacé et/ou basculé dans l'unité correspondante au moyen de deux groupes de préférence de trois vis équidistantes.

10. Procédé selon la revendication 9, **caractérisé en ce que** des moteurs pas-à-pas agissant sur les vis de réglage sont utilisés pour la translation et/ou le basculement.

11. Procédé selon l'une des revendications 2 à 8, **caractérisé en ce que** des actionneurs piézoélectriques sont utilisés pour la translation et/ou le basculement.

12. Transmetteur rotatif selon la revendication 1, **caractérisé en ce que** la première partie (16) et la deuxième partie (18) sont reliées entre elles en contact direct à plat après l'ajustement au moyen d'une masse durcissable.

13. Transmetteur rotatif selon la revendication 1 ou 12, **caractérisé en ce que** la première partie (16) et la deuxième partie (18) se mettent chacune en prise en au moins trois endroits sur la circonférence du premier collimateur.

14. Transmetteur rotatif selon l'une des revendications 1 ou 12 à 13, **caractérisé en ce que** les plans perpendiculaires à l'axe optique ont un écartement supérieur à 1/2, de préférence supérieur à 9/10 de la longueur du premier collimateur.
